# EUROPÄISCHE PATENTSCHRIFT

(11) **EP 3 207 436 B1**
(45) Veröffentlichungstag und Bekanntmachung des Hinweises auf die Patenterteilung: **05.05.2021**
(21) Anmeldenummer: 15781297.5
(22) Anmeldetag: 13.10.2015
(51) Int. Cl.: G05D 7/01, G05D 7/06, G05D 16/20

(54) **SELBSTREGELNDES SERVOVENTIL**
SELF-CONTROLLING SERVO VALVE
SERVOVALVE À AUTORÉGULATION

(30) Priorität: 15.10.2014 CH 15792014
(43) Veröffentlichungstag der Anmeldung: 23.08.2017
(73) Patentinhaber: Liebherr Machines Bulle SA, 1630 Bulle (CH)
(72) Erfinder: WOHLHAUSER, Patrick, 1723 Marly (CH)
(74) Vertreter: Laufhütte, Dieter
(86) Internationale Anmeldenummer: PCT/EP2015/002022
(87) Internationale Veröffentlichungsnummer: WO 2016/058694

(56) Entgegenhaltungen:
- EP-A2- 1 426 622
- DE-A1- 19 632 368

## Beschreibung

Die vorliegende Erfindung betrifft ein selbstregelndes Servoventil, insbesondere ein 3/2-Wegeventil für hohe Volumenstromanforderungen.

Derartige Servoventile können beispielsweise zur Stellung des Schrägwinkels für eine 2-Quadranten Verdrängereinheit in Hydraulikkreisen verwendet werden. Das Konzept der vorliegenden Erfindung kann auch auf Servoventile übertragen werden, die für 4-Quadranten Verdrängereinheiten genutzt werden. Weitere mögliche Anwendungsbeispiele für ein erfindungsgemäßes Servoventil sind das Betätigen eines Hydraulikzylinders, z. B. bei Arbeitsgeräten von mobilen Arbeitsmaschinen, wie z. B. von Schaufeln eines Baggers, stationäre Anwendungen bei der Betätigung von z. B. Schleusentoren oder in der Robotik in Bereichen mit höherer Priorität von Leistungsdichte als hoher Stellgeschwindigkeit. Weitere Anwendungsbeispiele für erfindungsgemäße Servoventile umfassen die Umschaltung zwischen der Entnahme und der Zuführung von hydraulischer Leistung bei Druckspeichern oder Dieselhydraulische Hybridantriebe.

Insbesondere hinsichtlich des hohen Volumenstroms können die Anforderungen an gattungsgemäße Servoventile nach dem heutigen Stand der Technik nur mit einem vergleichsweise aufwendigen System erfüllt werden. Problematisch ist auch, dass eine vergleichbare Präzision in der Positionsregelung mit Bauteilen, die dem heutigen Stand der Technik entsprechen, nur mit einem höheren Aufwand verbunden und nur mit verschleißbehafteten Bauteilen möglich ist.

Selbstregelnde Servoventile mit den Merkmalen des Oberbegriffs des Anspruchs 1 sind bereits aus der DE 196 32 368 A1 bekannt.

Aufgabe der vorliegenden Erfindung ist es nun, ein verbessertes Servoventil bereitzustellen, dass insbesondere eine kompaktere und einfachere Bauform aufweist, als dies aus dem Stand der Technik bekannt ist.

Diese Aufgabe wird erfindungsgemäß durch ein selbstregelndes Servoventil mit Reglergehäuse, Vorsteuerstufe, Hauptstufe und Buchse gemäß dem Anspruch 1 gelöst, wobei die Vorsteuerstufe einen Proportionalmagneten und einen an einer Dämpfungsfeder gelagerten Vorsteuerkolben umfasst, wobei die Hauptstufe einen an einer Feder gelagerten Hauptsteuerkolben umfasst, wobei der Hauptsteuerkolben verschieblich innerhalb der Buchse gelagert ist und der Vorsteuerkolben verschieblich innerhalb des Hauptsteuerkolbens gelagert ist, wobei zwischen Vorsteuerkolben und Hauptsteuerkolben eine Spielfreifeder vorgesehen ist und wobei der Vorsteuerkolben wenigstens eine axiale Fluiddurchführung mit wenigstens drei axial voneinander beabstandeten Zuläufen sowie wenigstens eine Nut, insbesondere eine Ringnut, in einem mittleren Bereich des Vorsteuerkolbens umfasst.

Eine derartige Ausgestaltung des Servoventils ermöglicht eine besonders vorteilhafte präzise Positionsregelung, da nahezu kein Einfluss der Strömungskräfte auf die Position des Hauptsteuerkolbens und der Volumenströme im Hauptkreis vorliegt, weil bereits durch den Vorsteuerkolben ein Lageregelung des Hauptsteuerkolbens erreicht wird. Wenn in der Beschreibung davon die Rede ist, dass ein Bauteil, wie beispielsweise Vorsteuerkolben oder Hauptsteuerkolben, an Federn, wie beispielsweise an eine Dämpfungsfeder oder einer Spielfreifeder, gelagert sind, dann ist damit auch gemeint, dass besagte Federn auf die entsprechenden Teile, je nach Position der einzelnen Federn und Bauteile innerhalb des Servoventils, eine Kraft ausüben können und dadurch gegebenenfalls eine Relativbewegung zwischen den Bauteilen bzw. den Federn induziert werden kann. Ferner ist die Anzahl der in der Erfindung genannten Bauteile so zu verstehen, dass die Erfindung mit den genau drei genannten Federn und den genau zwei Steuerkolben ausführbar ist.

Der Vorsteuerkolben kann wie üblich als im Wesentlichen zylinderförmiges Bauteil ausgeführt sein, oder er kann eine davon abweichende Geometrie aufweisen. Durch die Form des Vorsteuerkolbens kann dabei auch die Geometrie der Nut mitbestimmt sein. Die Nut kann dabei an einer äußeren Mantelfläche des Vorsteuerkolbens verlaufen.

Ferner kann vorgesehen sein, dass die Nut des Vorsteuerkolbens mit wenigstens einem mittleren Zulauf des Vorsteuerkolbens verbunden ist. Liegt in der axialen Fluiddurchführung des Vorsteuerkolbens beispielsweise der Tankdruck an bzw. ist die axiale Fluiddurchführung des Vorsteuerkolbens mit dem Tank verbunden, so kann das Innere des Vorsteuerkolbens über mittleren Zulauf und Nut mit einem außerhalb vom Vorsteuerkolben gelegenen Bereich kommunizieren.

In einem weiteren bevorzugten Ausführungsbeispiel ist denkbar, dass der Hauptsteuerkolben wenigstens eine axiale Durchführung und/oder wenigstens drei Nuten, insbesondere drei Ringnuten, umfasst.

Die axiale Durchführung des Hauptsteuerkolbens kann dabei vorteilhaft zur Lagerung weiterer Bauteile und/oder zur Fluidleitung genutzt werden. Mit dem Begriff der axialen Durchführung kann dabei auch eine Durchführung gemeint sein, die weder gradlinig noch genau achsparallel zu der Längsachse des Hauptsteuerkolbens verläuft. Es genügt vielmehr, dass sich die Durchführung im Wesentlichen in Richtung der Längsachse des Hauptsteuerkolbens erstreckt. Über die drei Nuten bzw. Ringnuten, die an der äußeren Mantelfläche des Hauptsteuerkolbens angeordnet sein können, ist es möglich, unterschiedliche Kommunikationswege im außerhalb des Hauptsteuerkolbens gelegenen Bereich zu ermöglichen.

In einem weiteren bevorzugten Ausführungsbeispiel ist denkbar, dass der Vorsteuerkolben und die Spielfreifeder in der Durchführung des Hauptsteuerkolbens angeordnet sind. Somit kann der Vorsteuerkolben über seine Nut und seinen mittleren Zulauf direkt mit einer inneren Mantelfläche des Hauptsteuerkolbens kommunizieren. Ferner können Vorsteuerkolben und Hauptsteuerkolben in bestimmten Positionierungen die axiale Durchführung des Hauptsteuerkolbens zur Fluidführung nutzen. Je nach relativer Position von Vorsteuerkolben und Hauptsteuerkolben zueinander können so unterschiedliche Fluidpfade realisiert werden.

In einem weiteren bevorzugten Ausführungsbeispiel ist denkbar, dass die axiale Durchführung des Hauptsteuerkolbens wenigstens vier axial voneinander beabstandete Zugänge umfasst. Bei einem im Wesentlichen zylinderförmig ausgeführten Hauptsteuerkolben können dabei zwei Zugänge an den Zylinderenden angeordnet sein. Diese können insbesondere in einem mittleren Bereich von Zylinderdecke und Zylinderboden angeordnet sein. Zwischen den beiden Zugängen an Zylinderboden und Zylinderdecke können im axialen Abstand voneinander zwei oder mehr weitere Zugänge angeordnet sein. Diese können beispielsweise als radial verlaufende Bohrungen, die im Wesentlichen die Zylinderlängsachse des Hauptkolbens schneiden ausgeführt sein. Somit ist denkbar, dass zwei der Zugänge des Hauptsteuerkolbens als radial oder im Wesentlichen radial verlaufende Durchgangsbohrungen ausgeführt sind, die die axiale Durchführung des Hauptsteuerkolbens schneiden.

In einem besonders bevorzugten Ausführungsbeispiel ist denkbar, dass eine der Nuten des Hauptsteuerkolbens mit wenigstens einem der Zugänge des Hauptsteuerkolbens kommuniziert.

In einem weiteren bevorzugten Ausführungsbeispiel ist denkbar, dass die Buchse eine axiale Durchführung mit wenigstens sechs axial voneinander beabstandeten Zugängen umfasst, und/oder dass die Buchse wenigstens eine Nut oder eine Ringnut, insbesondere vier Ringnuten, umfasst. Wie schon die Durchführung des Hauptsteuerkolbens, so kann auch die Durchführung der Buchse weder gradlinig noch genau achsparallel zu der Längsachse der Buchse verlaufen. Es genügt vielmehr, dass sich die Durchführung im Wesentlichen in Richtung der Längsachse der Buchse erstreckt. Alternativ zu den Ringnuten oder in Kombination mit diesen kann die Buchse 5 Steuerbohrungen aufweisen, die mit den Zugängen der Buchse kommunizieren.

In einem weiteren bevorzugten Ausführungsbeispiel ist denkbar, dass wenigstens zwei der Zugänge der Buchse mit wenigstens zwei der Nuten der Buchse kommunizieren.

Die vorliegende Erfindung bezieht sich ferner auf eine Vorrichtung, insbesondere eine Hydraulikvorrichtung mit einem Servoventil nach einem der Ansprüche 1 bis 9.

Weitere Vorteile und Einzelheiten der Erfindung werden anhand der Figuren beschrieben. Dabei zeigen:
- Figur 1:: Erfindungsgemäßes Servoventil;
- Figur 2:: Erfindungsgemäßes Servoventil in Neutralstellung;
- Figur 3:: Erfindungsgemäßes Servoventil in erster P-A-Stellung;
- Figur 4:: Erfindungsgemäßes Servoventil in zweiter P-A-Stellung;
- Figur 5:: Erfindungsgemäßes Servoventil in dritter P-A-Stellung;

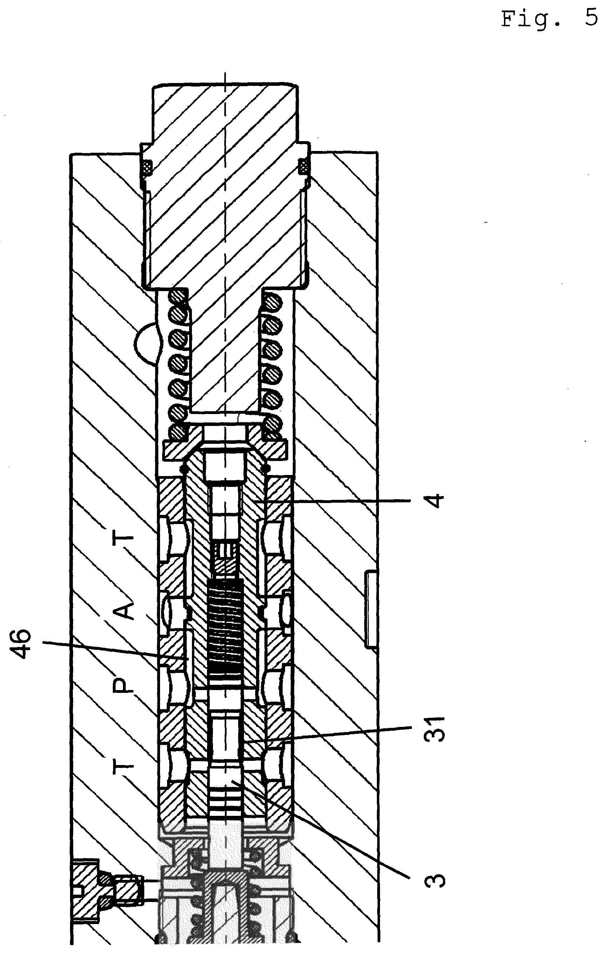

- Figur 5:: Erfindungsgemäßes Servoventil in erster A-T-Stellung;

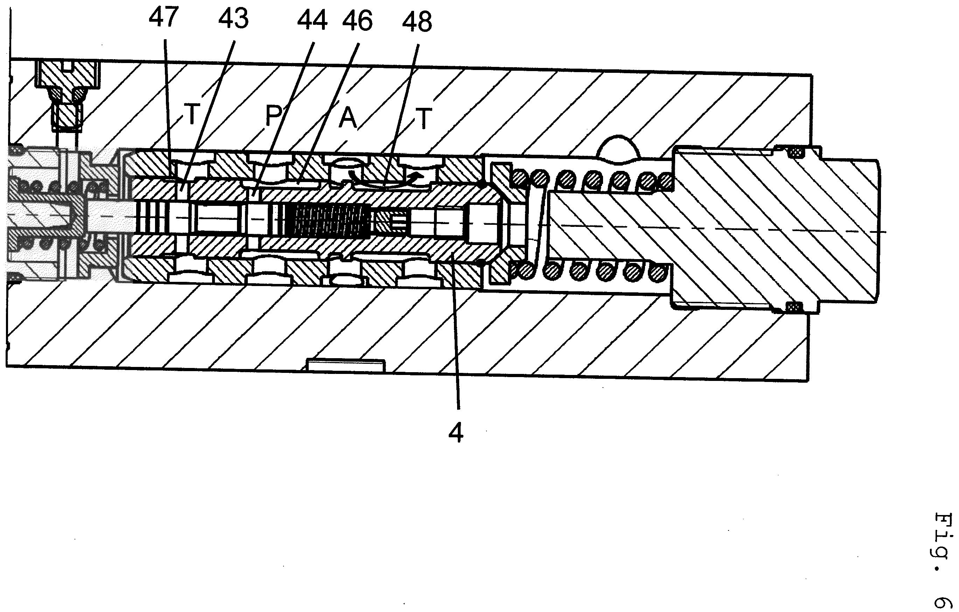

- Figur 6:: Erfindungsgemäßes Servoventil in zweiter A-T-Stellung;

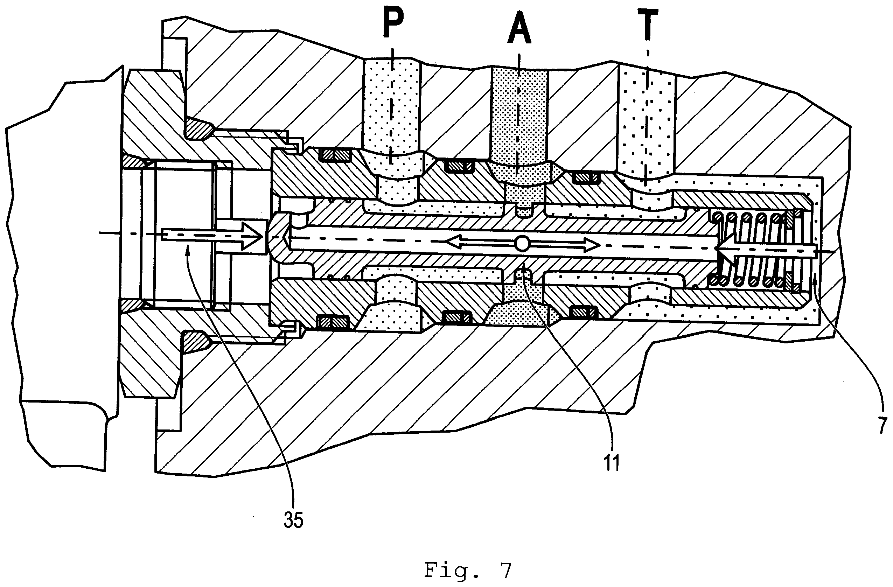

- Figur 7:: Servoventil gemäß dem Stand der Technik; und

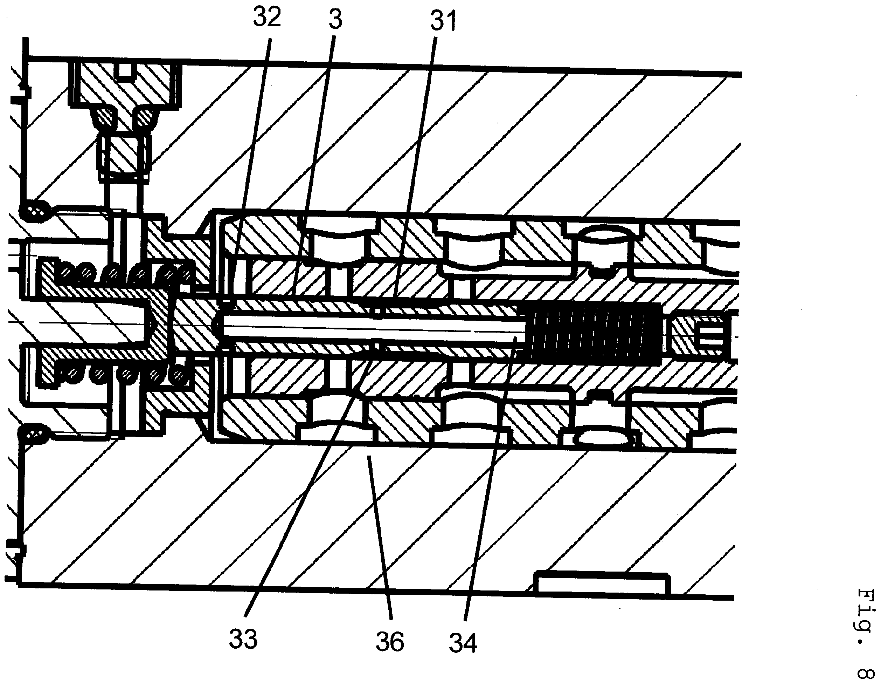

- Figur 8:: Erfindungsgemäßes Servoventil in Neutralstellung mit genauerer Darstellung des Vorsteuerkolbens 3.

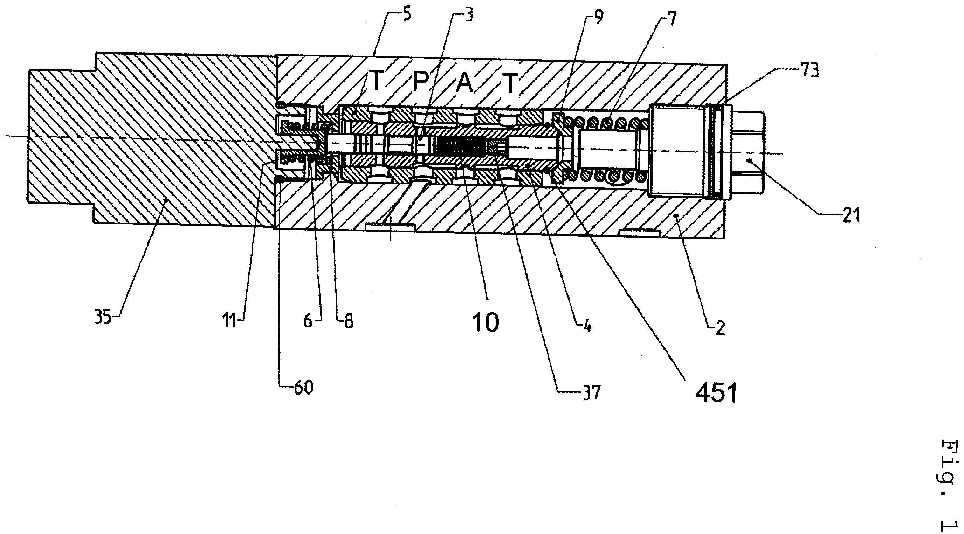

Figur 1 zeigt ein erfindungsgemäßes Servoventil bestehend aus einem Reglergehäuse 2, einem Proportionalmagneten 35, einem Hauptsteuerkolben 4, einem Vorsteuerkolben 3, einer Buchse 5 und drei Federn 6, 7 und 10. Der Regeldruck wirkt bei dem erfindungsgemäßen Servoventil auf beiden Seiten des Vorsteuerkolbens 3, sodass der Vorsteuerkolben 3 Druck-ausgeglichen ist.

Das Servoventil ist so aufgebaut, dass bei einer Variation des Magnetstroms die Magnetkraft des Proportionalmagneten 35 bzw. Elektromagneten 35 variiert wird. Die Magnetkraft wirkt auf die Dämpfungsfeder 6 ein und beeinflusst dadurch den Hub des Vorsteuerkolbens 3. Durch die Bewegung des Vorsteuerkolbens 3 verändern sich die Öffnungsweiten der Steuerkanten zwischen dem Vorsteuerkolben 3 und dem Hauptsteuerkolben 4. Dieses wiederum beeinflusst den Regeldruck, der sich vor dem Hauptsteuerkolben 4 aufbaut und diesen bewegt. In Abhängigkeit davon stellt sich die Öffnungsweite der beiden Steuerkanten P -> A oder A -> T zwischen dem Hauptsteuerkolben 4 und der Buchse 5 ein. Mit den Buchstaben A, P, und T sind die unterschiedlichen Anschlüsse des Servoventils bezeichnet. Der Regeldruck wirkt gegen eine Feder 7. Die durch das strömende Öl auftretenden Maximalkräfte in Richtung A -> T werden durch die entgegenwirkende Kraft der Feder 7 auch bei deaktiviertem Elektromagnet kompensiert. Bei der Feder 7 kann es sich daher um eine starke Feder handeln.

Vorteilhaft an dem erfindungsgemäßen Servoventil ist die Ausführung der Vor- und Hauptsteuerung auf einer einzigen Achse. Hierdurch wird die Bauweise vereinfacht und es ist ferner ein Konzept mit kompakter Bauform möglich.

Das vorgeschlagene Konzept ermöglicht ferner eine besonders präzise Positionsregelung, da nahezu kein Einfluss der Strömungskräfte auf die Position des Hauptsteuerkolbens 4 und der Volumenströme im Hauptkreis vorliegt und zwar weil bereits durch den Vorsteuerkolben 3 eine Lageregelung des Hauptsteuerkolbens 4 erreicht wird.

Als Ausführungsmöglichkeit bei der Herstellung des erfindungsgemäßen Servoventils kommt in Frage, das Ventil in einem Gehäuse mit einer gepressten Buchse 5 zu montieren. Diese Ausführung entspricht im Wesentlichen den Figuren. Alternativ ist auch eine Patronenausführung des erfindungsgemäßen Servoventils denkbar.

Für eine optimale Ausführung der Erfindung ist die Auslegung der Feder 7 essentiell. Die Kraft der Feder 7 in Richtung A -> T muss hoch genug sein, damit die maximal auftretenden Strömungskräfte auch bei einem deaktivierten Elektromagnet 35 bzw. stromlosen Magneten nicht zu einer Änderung der Öffnungsweiten der Steuerkanten führt.

Im Vorsteuerkolben 3 herrschen geringe Volumenströme und dementsprechend niedrige Strömungskräfte, was zu einer vernachlässigbar kleinen Positionsänderung der Steuerkanten im Vorsteuerkolben 3 führt. Im Gegensatz dazu herrschen im Hauptsteuerkolben 4 hohe Volumenströme. Demzufolge ist die Kompensation der auftretenden Strömungskräfte sinnvoll und bei entsprechend hohen Anforderungen absolut notwendig.

Wie in Figur 1 zu erkennen ist, können ferner Federteller 8, 9 und 11 vorgesehen sein, die zur Aufnahme bzw. Führung der Federn 6, 7 und 10 ausgelegt sind. Mittels einer Verschlussschraube 21 kann das Servoventil innerhalb des Gehäuses 2 feststellbar sein, wobei O-Ringe 60, 73 die Dichtigkeit der Vorrichtung sicherstellen. Mittels eines Sprengrings 451 kann der Hauptsteuerkolben 4 in seiner axialen Bewegungsfreiheit begrenzt sein. Ein Gewindestift 37 kann eine axial verlaufende Durchführung aufweisen und beispielsweise zum Einstellen des Federwegs der Feder 10 dienen.

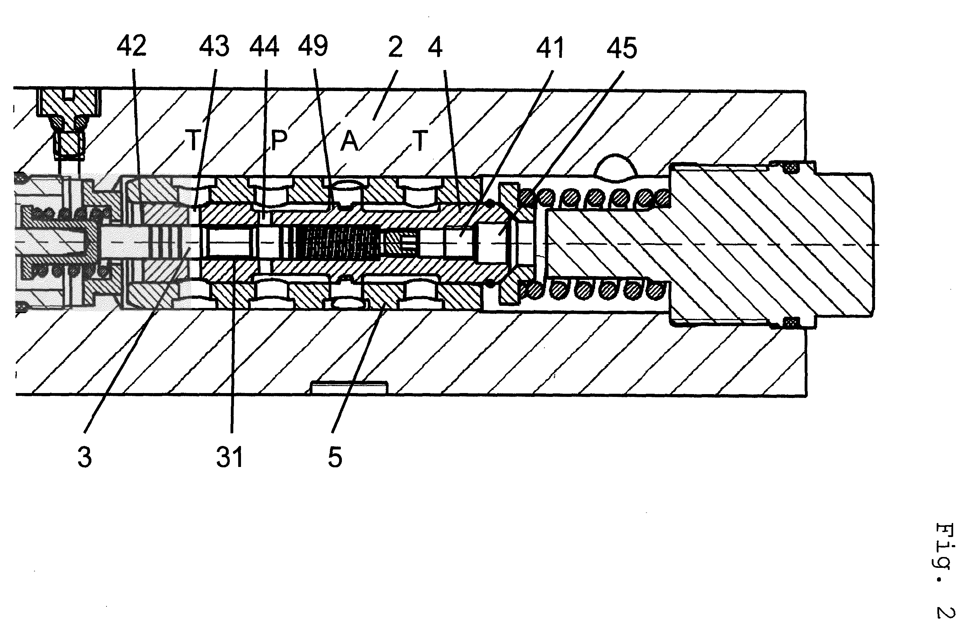

Figur 2 zeigt ein erfindungsgemäßes Servoventil in einer Neutralstellung. Dabei sind mögliche Zugänge 42, 43, 44 und 45 des Hauptsteuerkolbens 4 gezeigt. Zugänge 42 und 45 können an den axialen Enden des hohlzylinderförmig ausgebildeten Hauptsteuerkolbens 4 bereitgestellt sein, wobei eine axiale Durchführung 41 zwischen den Zugängen 42 und 45 innerhalb des Hauptsteuerkolbens 4 bereitgestellt ist. Zugänge 43 und 44 können dazu quer bzw. in radialer Richtung des Hauptsteuerkolbens 4 angeordnete Durchführungen sein. Der Hauptsteuerkolben 4 kann in der Buchse 5 verschieblich gelagert sein, welche wiederum fest in dem Gehäuse 2 gelagert sein kann. Der Vorsteuerkolben 3 kann relativ beweglich zum Hauptsteuerkolben 4 und in diesem gelagert sein.

In der Neutralstellung der Figur 2 sperrt ein Absperrbereich 49 den Anschluss A gegen die anderen Anschlüsse ab. Auch die an dem Vorsteuerkolben 3 bereitgestellte Nut 31 befindet sich in einer Position, in welcher sie mit keinem der Anschlüsse P oder T kommuniziert.

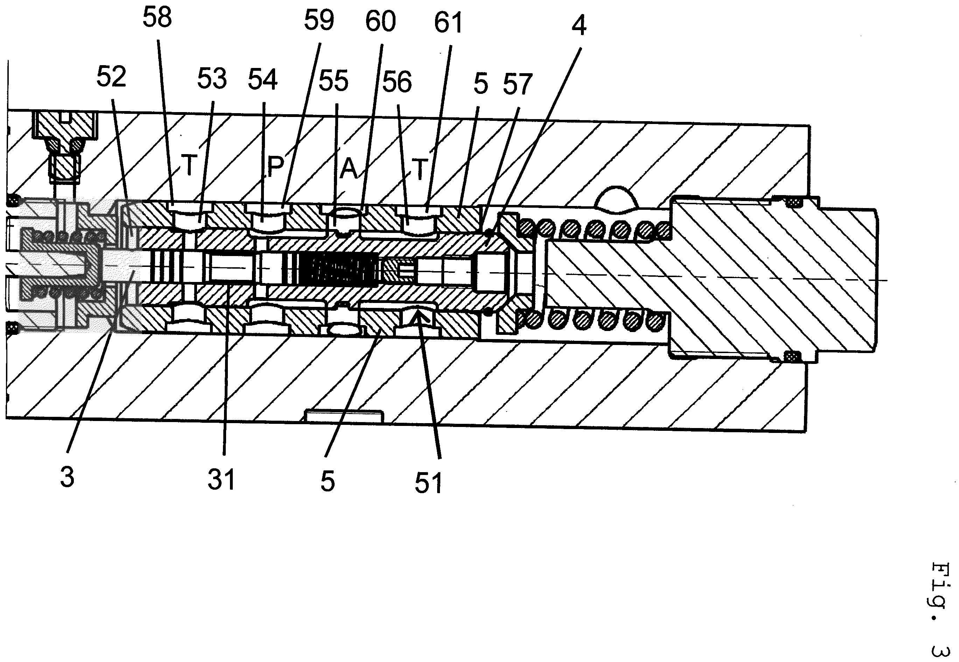

Figur 3 zeigt das erfindungsgemäße Servoventil in einer Stellung, in der Anschluss P über einen mittleren Zulauf 33 des Vorsteuerkolbens 3 und die Ringnut 31 des Vorsteuerkolbens 3 mit der axialen Fluiddurchführung 36 des Vorsteuerkolbens 3 kommuniziert. Zulauf 33 und Fluiddurchführung 36 des Vorsteuerkolbens 3 gehen dabei aus der Figur 8 hervor. Die beiden Anschlüsse T und der Anschluss A sind isoliert. Figur 3 zeigt ferner Zugänge 52, 53, 54, 55, 56, 57 und Nuten 58, 59, 60, 61 der Buchse 5. Über besagte Zugänge und Nuten kann die Buchse 5 mit den beiden Steuerkolben 3 und 4 sowie mit den Anschlüssen P, A, T kommunizieren. Die Nuten 58, 59, 60, 61 können dabei im Wesentlichen axial voneinander beabstandet an einer äußeren Mantelfläche der im Wesentlichen zylinderförmigen Buchse 5 vorgesehen sein. Zugänge 53, 54, 55, 56 kommunizieren über die Nuten 58, 59, 60, 61 mit einer axialen Durchführung 51 der Buchse 5. Zugänge 52, 57 sind an den axialen Enden der Durchführung 51 vorgesehen. Der Hauptsteuerkolben 4 ist zumindest teilweise in der Durchführung 51 der Buchse 5 verschieblich gelagert.

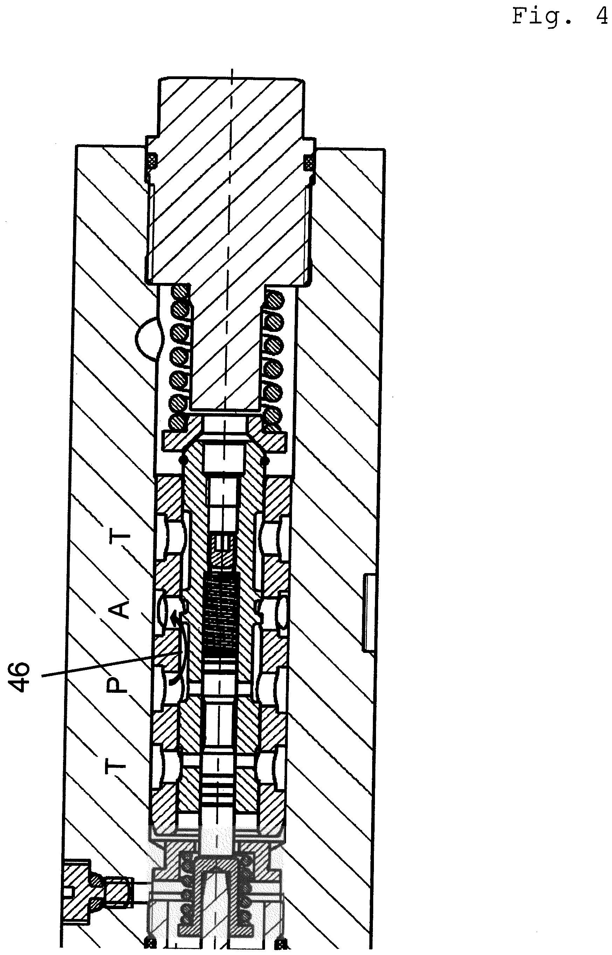

Figur 4 zeigt eine Stellung des erfindungsgemäßen Servoventils, bei dem der Anschluss P und der Anschluss A über eine Ringnut 46 miteinander kommunizieren. Der Fluidfluss ist mit einem Pfeil gekennzeichnet. Die beiden Anschlüsse T sind isoliert.

In einer weiteren Stellung des erfindungsgemäßen Servoventils ist es möglich, dass die Anschlüsse P und A weiterhin miteinander kommunizieren. Wie aus Figur 8 ableitbar, ist dabei jedoch zusätzlich wenigstens einer der Anschlüsse T über den Zulauf 33 und die Ringnut 31 des Vorsteuerkolbens 3 mit der axialen Fluiddurchführung 36 des Vorsteuerkolbens 3 in Verbindung. Hierzu muss der Vorsteuerkolben 3 in der Figur 8 so nach links verstellt sein, dass die Ringnut 31 mit dem linken Anschluss T kommuniziert. Auf beiden Längsseiten bzw. den axial äußeren Seiten von sowohl Vorsteuerkolben 3 als auch Hauptsteuerkolben 4 liegt somit der Druck aus Anschluss T an, welcher der Tankdruck und damit ein niedriger Druck sein kann. Eine derartige Stellung des Vorsteuerkolbens 3 ist in der Figur 5 gezeigt.

Figur 5 zeigt eine Stellung des erfindungsgemäßen Servoventils, in der der linke Anschluss T, wie geschildet und wie aus Figur 8 ableitbar, mit der axialen Fluiddurchführung 36 des Vorsteuerkolbens 3 über den Zulauf 33 und die Ringnut 31 kommuniziert. Die restlichen Anschlüsse sind im Gegensatz zur in Figur 4 gezeigten Stellung des Ventils isoliert.

Figur 6 zeigt eine Stellung des erfindungsgemäßen Servoventils, in der Anschluss A über eine Nut 48 des Hauptsteuerkolbens 4 mit dem rechten Anschluss T kommuniziert. Die restlichen Anschlüsse sind isoliert. Figur 6 zeigt ferner eine mögliche Anordnung der Nuten 46, 47, 48 des Hauptsteuerkolbens 4 sowie die Verbindung der Nuten 46, 47 mit den Zugängen 43, 44 des Hauptsteuerkolbens 4. Die Nuten 46, 47, 48 können dabei axial voneinander beabstandet an einer Außenfläche des Hauptsteuerkolbens 4 bereitgestellt und als Ringnuten ausgeführt sein. Mittels Nut 46 kann eine Verbindung zwischen den Anschlüssen P und A hergestellt werden. Unabhängig davon kann über die Nut 46, den Zugang 44 des Hauptsteuerkolbens 4, den Vorsteuerkolben 3 und dessen Ringnut 31 eine Verbindung zwischen Anschluss P und der axialen Fluiddurchführung 36 des Vorsteuerkolbens 3 hergestellt werden.

In einer weiteren Stellung des erfindungsgemäßen Servoventils, bei der wie in der Figur 6 Anschluss A über Nut 48 mit Anschluss T kommuniziert, ist es möglich, dass gleichzeitig die Steuerkolben 3, 4 so angeordnet sind, dass Anschluss P über Nut 31 und Zulauf 33 mit der axialen Fluiddurchführung 36 des Vorsteuerkolbens 3 kommuniziert. Hierzu muss der Vorsteuerkolben 3 in der Figur 8 so nach rechts verstellt sein, dass die Ringnut 31 mit dem Anschluss P kommuniziert.

Erfindungsgemäß kann somit mit einer geringen Ansteuerleistung z. B. einem vergleichsweise niedrigen Magnetisierungsstrom bzw. mit einem niedrigen Strom zur Erzeugung eines Magnetfeldes der Vorsteuerkolben 3 betätigt werden. In Abhängigkeit von der Position des Vorsteuerkolbens 3 wird der Hauptsteuerkolben 4 positioniert. Es besteht ein Durchgriff der ersten Ansteuerstufe bzw. der Vorsteuerstufe auf die Hauptsteuerstufe bzw. Hauptstufe. Es können mit vergleichsweise sehr niedrigen Ansteuerleistungen hohe hydraulische Leistungen reguliert werden. Somit handelt es sich um eine kaskadierte Ansteuerung.

Das neuartige an dem erfindungsgemäßen Servoventil ist zum einen der koaxiale Aufbau der Vor- und Hauptsteuerung, welcher einen geringen Platzbedarf aufweist. Fernerhin entfällt eine Hydraulikleitung zwischen Vor- und Hauptsteuerstufe, wodurch die Konstruktion weiterhin vereinfacht ist. Die Vorsteuerstufe ist demnach im Gegensatz zum Stand der Technik keine separate Komponente.

Zum anderen wird der Hauptsteuerkolben erfindungsgemäß automatisch immer in eine Position getrieben, bei der die Steuerkanten zwischen Vorsteuer- und Hauptsteuerkolben 3, 4 geschlossen sind. Dies bedeutet, dass eine Änderung der Ansteuerung durch Veränderung des Magnetisierungsstroms erfolgt. Der Hauptsteuerkolben 4 bewegt sich solange, bis die Steuerkanten zwischen Vorsteuer- und Hauptsteuerkanten wieder geschlossen sind. Daraus ergibt sich, dass die Position des Hauptsteuerkolbens 4 nicht durch die Strömungskräfte beeinflusst wird und das System rückwirkungsfrei oder nahezu rückwirkungsfrei arbeitet.

Bei einer in Figur 7 gezeigten und dem Stand der Technik entsprechenden Lösung ist die Position des Steuerkolbens nicht allein vom Magnetisierungsstrom abhängig, sondern wird auch stark durch die Strömungskräfte beeinflusst. Da das Servoventil speziell für Anwendungen genutzt werden soll, bei dem hohe Hydrauliköl-Volumenströme auftreten, sind die Vorteile der vorliegenden Erfindung, insbesondere hinsichtlich der kraftarmen Steuerung, bedeutend.

Figur 8 zeigt ein erfindungsgemäßes Servoventil in einer Neutralstellung, wobei der Vorsteuerkolben 3 genauer dargestellt ist. Dabei sind die axial voneinander beabstandeten Zuläufe 32, 33, 34 des Vorsteuerkolbens 3 aufgezeigt. Zuläufe 32 und 34 können dabei an Zylinderboden bzw. Zylinderdecke bzw. im Wesentlichen an den Enden des hohlzylinderförmig oder hohlzylinderähnlich ausgeführten Vorsteuerkolbens 3 angeordnet sein. Zulauf 33 kann dagegen axial zwischen den beiden endseitigen Zuläufen 32 und 34 angeordnet sein und mit der Ringnut 31 kommunizieren. Zuläufe können dort, wo angebracht, als Durchführungen ausgeführt sein, welche sich beispielsweise von zwei Seiten radial in das Innere des Vorsteuerkolbens 3 erstrecken. Dies gilt beispielsweise für die Zuläufe 32 und 33 der Figur 8.

## Patentansprüche

1. Selbstregelndes Servoventil mit Reglergehäuse (2), Vorsteuerstufe und Hauptstufe, wobei die Vorsteuerstufe einen Proportionalmagneten (35) und einen an einer Dämpfungsfeder (6) gelagerten Vorsteuerkolben (3) umfasst, wobei die Hauptstufe einen an einer Feder (7) gelagerten Hauptsteuerkolben (4) umfasst, wobei der Vorsteuerkolben (3) verschieblich innerhalb des Hauptsteuerkolbens (4) gelagert ist, und wobei zwischen Vorsteuerkolben (3) und Hauptsteuerkolben (4) eine Spielfreifeder (10) vorgesehen ist,
**dadurch gekennzeichnet,**
**dass** das selbstregelnde Servoventil weiterhin eine Buchse (5) umfasst, wobei der Hauptsteuerkolben (4) verschieblich innerhalb der Buchse (5) gelagert ist, und dass der Vorsteuerkolben (3) wenigstens eine axiale Fluiddurchführung (36) mit wenigstens drei axial voneinander beabstandeten Zuläufen (32, 33, 34) sowie wenigstens eine Nut (31), insbesondere eine Ringnut (31), in einem mittleren Bereich des Vorsteuerkolbens (3) umfasst.

2. Selbstregelndes Servoventil nach Anspruch 1, **dadurch gekennzeichnet, dass** die Nut (31) des Vorsteuerkolbens (3) mit wenigstens einem mittleren Zulauf (33) des Vorsteuerkolbens (3) verbunden ist.

3. Selbstregelndes Servoventil nach einem der vorhergehenden Ansprüche, **dadurch gekennzeichnet, dass** der Hauptsteuerkolben (4) wenigstens eine axiale Durchführung (41) und/oder wenigstens drei Nuten (46, 47, 48), insbesondere drei Ringnuten (46, 47, 48), umfasst.

4. Selbstregelndes Servoventil nach Anspruch 3, **dadurch gekennzeichnet, dass** der Vorsteuerkolben (3) und die Spielfreifeder (10) in der Durchführung (41) des Hauptsteuerkolbens (4) angeordnet sind.

5. Selbstregelndes Servoventil nach einem der Ansprüche 3 oder 4, **dadurch gekennzeichnet, dass** die axiale Durchführung (41) des Hauptsteuerkolbens (4) wenigstens vier axial voneinander beabstandete Zugänge (42, 43, 44, 45) umfasst.

6. Selbstregelndes Servoventil nach Anspruch 5, **dadurch gekennzeichnet, dass** eine der Nuten (46, 47, 48) des Hauptsteuerkolbens (4) mit wenigstens einem der Zugänge (42, 43, 44, 45) des Hauptsteuerkolbens (4) kommuniziert.

7. Selbstregelndes Servoventil nach einem der vorhergehenden Ansprüche, **dadurch gekennzeichnet, dass** die Buche (5) eine axiale Durchführung (51) mit wenigstens sechs axial voneinander beabstandeten Zugängen (52, 53, 54, 55, 56, 57) umfasst, und/oder dass die Buchse (5) wenigstens eine Nut (58, 59, 60, 61) oder eine Ringnut (58, 59, 60, 61), insbesondere vier Ringnuten (58, 59, 60, 61), umfasst.

8. Selbstregelndes Servoventil nach Anspruch 7, **dadurch gekennzeichnet, dass** wenigstens zwei der Zugänge (52, 53, 54, 55, 56, 57) der Buchse (5) mit wenigstens zwei der Nuten (58, 59, 60, 61) kommunizieren.

9. Vorrichtung, insbesondere Hydraulikvorrichtung, mit einem Servoventil nach einem der Ansprüche 1 bis 8.

## Claims

1. Self-regulating servo valve, comprising an regulator housing (2), pilot stage and main stage, wherein the pilot stage comprises a proportional magnet (35) and a pilot piston (3) that is mounted on a damping spring (6), wherein the main stage comprises a main control piston (4) that is mounted on a spring (7), wherein the pilot piston (3) is displaceably mounted inside the main control piston (4), and wherein a backlash-free spring (10) is provided between the pilot piston (3) and the main control piston (4),
**characterised in that**
the self-regulating servo valve further comprises a bushing (5), wherein the main control piston (4) is displaceably mounted inside the bushing (5), and **in that** the pilot piston (3) comprises at least one axial fluid passage (36) with at least three intakes (32, 33, 34) which are axially spaced apart from one another, as well as at least one groove (31), in particular an annular groove (31), in a central region of the pilot piston (3).

2. Self-regulating servo valve according to claim 1, **characterised in that** the groove (31) of the pilot piston (3) is connected to at least one central intake (33) of the pilot piston (3).

3. Self-regulating servo valve according to one of the preceding claims, **characterised in that** the main control piston (4) comprises at least one axial passage (41) and/or at least three grooves (46, 47, 48), in particular three annular grooves (46, 47, 48).

4. Self-regulating servo valve according to claim 3, **characterised in that** the pilot piston (3) and the backlash-free spring (10) are arranged in the passage (41) of the main control piston (4).

5. Self-regulating servo valve according to either claim 3 or 4, **characterised in that** the axial passage (41) of the main control piston (4) comprises at least four intakes (42, 43, 44, 45) which are axially spaced apart from one another.

6. Self-regulating servo valve according to claim 5, **characterised in that** one of the grooves (46, 47, 48) of the main control piston (4) communicates with at least one of the intakes (42, 43, 44, 45) of the main control piston (4).

7. Self-regulating servo valve according to one of the preceding claims, **characterised in that** the bushing (5) comprises an axial passage (51) with at least six intakes (52, 53, 54, 55, 56, 57) which are axially spaced apart from one another, and/or **in that** the bushing (5) comprises at least one groove (58, 59, 60, 61) or one annular groove (58, 59, 60, 61), in particular four annular grooves (58, 59, 60, 61).

8. Self-regulating servo valve according to claim 7, **characterised in that** at least two of the intakes (52, 53, 54, 55, 56, 57) of the bushing (5) communicate with at least two of the grooves (58, 59, 60, 61).

9. Device, in particular hydraulic device, comprising a servo valve according to one of claims 1 to 8.

## Revendications

1. Servovalve à autorégulation comprenant un boîtier de régulateur (2), un étage pilote et un étage principal, l'étage pilote comprenant un électro-aimant proportionnel (35) et un piston pilote (3) monté sur un ressort amortisseur (6), l'étage principal comprenant un piston de commande principal (4) monté sur un ressort (7), le piston pilote (3) étant monté coulissant à l'intérieur du piston de commande principal (4) et un ressort sans jeu (10) étant prévu entre le piston pilote (3) et le piston de commande principal (4),
**caractérisée en ce que**
la servovalve à autorégulation comprend en outre une douille (5), le piston de commande principal (4) étant monté coulissant à l'intérieur de la douille (5), et **en ce que** le piston pilote (3) comprend au moins un passage de fluide (36) axial doté d'au moins trois arrivées (32, 33, 34) espacées axialement les unes des autres, ainsi qu'au moins une rainure (31), en particulier une rainure annulaire (31), dans une zone centrale du piston pilote (3).

2. Servovalve à autorégulation selon la revendication 1, **caractérisée en ce que** la rainure (31) du piston pilote (3) est reliée à au moins une arrivée (33) centrale du piston pilote (3).

3. Servovalve à autorégulation selon l'une des revendications précédentes, **caractérisée en ce que** le piston de commande principal (4) comprend au moins un passage (41) axial et/ou au moins trois rainures (46, 47, 48), en particulier trois rainures annulaires (46, 47, 48).

4. Servovalve à autorégulation selon la revendication 3, **caractérisée en ce que** le piston pilote (3) et le ressort sans jeu (10) sont disposés dans le passage (41) du piston de commande principal (4).

5. Servovalve à autorégulation selon l'une des revendications 3 ou 4, **caractérisée en ce que** le passage (41) axial du piston de commande principal (4) comprend au moins quatre arrivées (42, 43, 44, 45) espacées axialement les unes des autres.

6. Servovalve à autorégulation selon la revendication 5, **caractérisée en ce qu'**une des rainures (46, 47, 48) du piston de commande principal (4) communique avec au moins une des arrivées (42, 43, 44, 45) du piston de commande principal (4).

7. Servovalve à autorégulation selon l'une des revendications précédentes, **caractérisée en ce que** la douille (5) comprend un passage (51) axial doté d'au moins six arrivées (52, 53, 54, 55, 56, 57) espacées axialement les unes des autres et/ou **en ce que** la douille (5) comprend au moins une rainure (58, 59, 60, 61) ou une rainure annulaire (58, 59, 60, 61), en particulier quatre rainures annulaires (58, 59, 60, 61).

8. Servovalve à autorégulation selon la revendication 7, **caractérisée en ce qu'**au moins deux des arrivées (52, 53, 54, 55, 56, 57) de la douille (5) communiquent avec au moins deux des rainures (58, 59, 60, 61).

9. Dispositif, en particulier dispositif hydraulique, comprenant une servovalve selon l'une des revendications 1 à 8.
